# NEUE EUROPÄISCHE PATENTSCHRIFT

(11) **EP 0 682 756 B2**
(45) Veröffentlichungstag und Bekanntmachung des Hinweises auf die Entscheidung über den Einspruch: **13.10.1999**
(45) Hinweis auf die Patenterteilung: 29.01.1997
(21) Anmeldenummer: 92923800.4
(22) Anmeldetag: 26.11.1992
(51) Int. Cl.: F16H 61/00

(54) **GETRIEBE MIT EINER VERDRÄNGERPUMPE**
SHIFT GEAR WITH A POSITIVE-DISPLACEMENT PUMP
BOITE DE VITESSES A POMPE VOLUMETRIQUE

(30) Priorität: 30.11.1991 DE 4139611
(43) Veröffentlichungstag der Anmeldung: 22.11.1995
(73) Patentinhaber: ZF FRIEDRICHSHAFEN Aktiengesellschaft, 88038 Friedrichshafen (DE)
(72) Erfinder: ROWE, Gerald, D-8990 Lindau (DE); KUHN, Walter, D-7990 Friedrichshafen (DE); ZIPPEL, Christof, D-7777 Salem (DE); REICHENMILLER, Michael, D-7076 Waldstetten (DE)
(86) Internationale Anmeldenummer: EP9202726
(87) Internationale Veröffentlichungsnummer: WO9311376

(56) Entgegenhaltungen:
- EP-A- 0 293 195
- DE-A- 1 500 387
- DE-A- 3 005 657
- DE-A- 3 510 633
- DE-C- 3 008 575
- DE-C- 3 933 978
- GB-A- 2 069 609
- GB-B- 1 176 621
- US-A- 4 876 923

## Beschreibung

Die Erfindung betrifft ein Getriebe, insbesondere Automatgetriebe oder stufenloses Getriebe, für Kraftfahrzeuge, mit einer Verdrängerpumpe für die Versorgung der Schmiereinrichtung und der Steuer- und Betätigungseinrichtungen des Getriebes, wobei die Verdrängerpumpe mit der Drehzahl eines Antriebsmotors angetrieben wird.

Bei bekannten derartigen Getrieben sind die Pumpen sogenannte Konstantpumpen, deren Förderstrom proportional mit ihrer Antriebsdrehzahl ansteigt. Ein derartiges Getriebe ist aus der US-A-4 876 923 bekannt. Die Auslegung der Pumpe erfolgt im allgemeinen bei einer Leerlaufdrehzahl. Der dabei gelieferte Förderstrom muß bereits die Anforderungen des zu versorgenden Getriebes erfüllen.

Eine derartige Pumpe fördert bei höheren Drehzahlen ein Mehrfaches der erforderlichen Menge. Die Kanalquerschnitte der Pumpe müssen deshalb stark überdimensioniert werden. Außerdem ergibt die damit zusammenhängende hohe Leistungsaufnahme der Pumpe einen schlechten Getriebewirkungsgrad.

Der Erfindung liegt die Aufgabe zugrunde, das bekannte Getriebe derart zu verbessem, daß die Pumpe weniger Leistung aufnimmt und damit der Getriebe-Wirkungsgrad verbessert wird. Dazu soll die Pumpe eine kleine Ausdehnung in axialer Richtung aufweisen und einfache, preiswert herzustellende Teile enthalten.

Diese Aufgabe wird durch das im Anspruch 1 gekennzeichnete Getriebe gelöst. Die Verdrängerpumpe eine sauggedrosselte Radialkolbenpumpe ist.

Während die Leistungsaufnahme von ungedrosselten Pumpen proportional mit der Fördermenge und damit mit der Drehzahl ansteigt, wird bei einer sauggedrosselten Pumpe ab einer bestimmten Drehzahl ein nahezu konstanter Förderstrom gefördert, der nur eine ebenso nahezu konstante Leistungsaufnahme erfordert. Eine sauggedrosselte Radialkolbenpumpe hat zusätzlich noch den Vorteil eines besseren volumetrischen Wirkungsgrades. Aufgrund der, auch bei hohen Drücken, nur geringen Leckage handelt es sich bei der Radialkolbenpumpe um eine sehr zuverlässige Pumpe. Eine sauggedrosselte Radialkolbenpumpe als solche ist aus der DE-C2-25 40 879 bekannt.

Vorteilhafte und zweckmäßige Ausgestaltungen der Erfindung sind in der Unteranspruch angegeben.

Für einen einfachen Antrieb der Pumpe wird deren Antriebsteil zweckmäßigerweise mit einem Teil einer dem Getriebe vorgeschalteten Anfahreinrichtung verbunden. Der Exzenter der Radialkolbenpumpe wird vorteilhafterweise mit dem P umpen rad ein es hydrodynamischen Wandlers verbunden. Da die durch das Innere der Verdrängerpumpe hindurchgehende Welle im allgemeinen gehäusefest ist, wird der Exzenter der Radialkolbenpumpe als Exzentergleitbuchse ausgeführt, die über einen axial gerichteten Fortsatz der Pumpenwelle des Wandlers angetrieben wird.

Die Kolben der Radialkolbenpumpe werden als Tiefziehteile ausgebildet, deren radial nach außen gerichteter Kolbenrand mit einer in einem Pumpengehäuse angeordneten Ansaug-Ringnut und deren Ansaugöffnungen zusammenarbeitet, und so ergibt sich eine "oben ansaugende" Pumpe. Dies bedeutet, daß der Ansaugraum nicht im Inneren im Bereich des Exzenters liegt. Damit wird der Exzenterraum nicht mit dem im Kolbenraum entstehenden hohen Unterdruck beaufschlagt. Bei einer "unten ansaugenden" Kolbenpumpe müßte dieser Exzenterraum mit Öl befüllt sein. Wegen des großen Wellendurchmessers und des dadurch bedingten großen Dichtungsdurchmessers könnte über die Dichtung Luft nachgesaugt werden. Dieser Nachteil kann durch die erfindungsgemäße Anordnung vermieden werden, da hierbei der Exzenterraum nur einen Ölnebel zur Schmierung des Exzenters enthält. Die Ansaug-Ringnut läßt sich einfach in das Gehäuse einarbeiten und benötigt einen geringeren axialen Raum als die Anordnung von Einzelbohrungen und einer dazu erforderlichen Sammelringnut. Ebenso wird dabei die Ölführung zu dem Wandler vereinfacht.

Die Zylinderbohrungen der Radialkolbenpumpe sind radial nach außen durch einen Stopfen verschlossen, deren Durchgangsbohrungen mit einer für alle Stopfen gemeinsamen Bandfeder als Rückschlagventile wirken. Um eine bessere Beaufschlagung der Bandfeder durch den Förderdruck zu erreichen, sind die Stopfen mit parallelen Rillen versehen, die innerhalb einer bearbeiteten Dichffläche der Stirnflächen enden.

Der Exzenter der Radialkolbenpumpe ist als Exzentergleitbuchse ausgeführt, die auf der feststehenden Hohlwelle geführt ist. Bei Verwendung eines hydrodynamischen Wandlers ist die Exzentergleitbuchse auf der Leitradhohlwelle gelagert.

Im folgenden wird die Erfindung anhand eines in der Zeichnung dargestellten Ausführungsbeispieles näher erläutert.

Es zeigt:

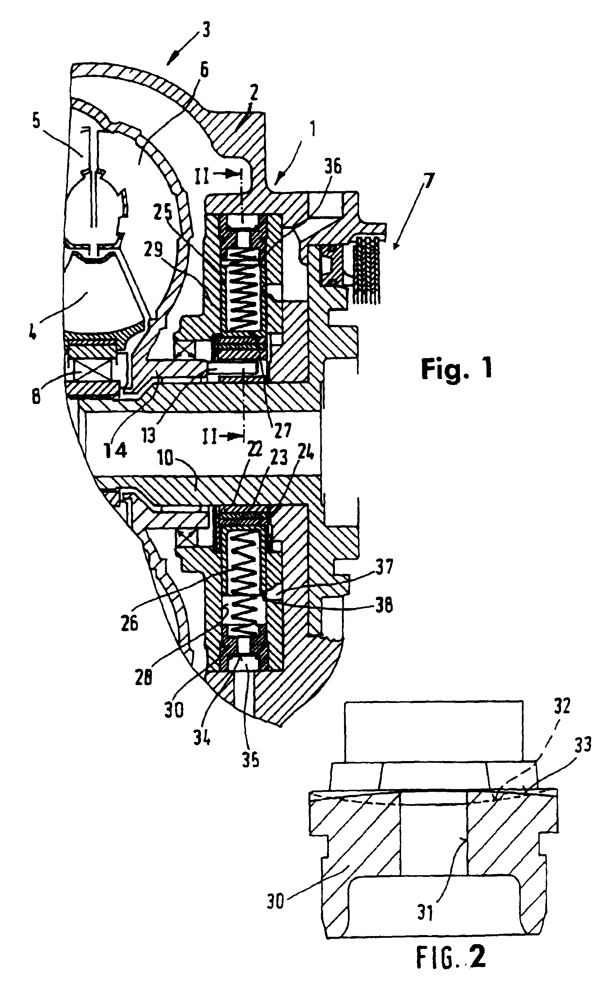

- Fig. 1: das erfindungsgemäße Getriebe in einem Teilquerschnitt und
- Fig. 2: einen Teilschnitt entsprechend der Linie II-II in Fig. 1, in vergrößertem Maßstab.

Eine Radialkolbenpumpe 1 ist in einem Getriebegehäuse 2 angeordnet. Das Getriebegehäuse 2 enthält außerdem eine Anfahreinrichtung in der Form eines hydrodynamischen Wandlers 3 mit einem Leitrad 4, einem Turbinenrad 5 und einem Pumpenrad 6.

Die Radialkolbenpumpe 1 schließt sich direkt an den Wandler 3 an. Auf der anderen Seite der Radialkolbenpumpe 1 liegt das eigentliche Getriebe, von dem nur eine Schaltbremse 7 teilweise dargestellt ist.

Das Leitrad 4 ist über einen Freilauf 8 auf einer gehäusefesten Leitradhohlwelle 10 gelagert. Auf der Leitradhohlwelle 10 ist eine Exzentergleitbuchse 22 gelagert, die durch einen Zapfen 13 angetrieben wird. Der Zapfen 13 ist als axialer Fortsatz einer mit dem Pumpenrad 6 verbundenen Pumpenwelle 14 ausgebildet. Da das Pumpenrad 6 mit der Motordrehzahl dreht, wird auch die Exzentergleitbuchse 22 mit der Motordrehzahl angetrieben.

Um die Reibung zu vermindern, ist es zweckmäßig, eine Gleitbuchse 23 und einen Gleitring 24 zwischen der Exzentergleitbuchse 22 und den Kolben 25 anzuordnen. Die Kolben 25 sind als Tiefziehteile ausgebildet und werden durch die Kraft von Druckfedem 26 mit ihrem radial innenliegenden Kolbenboden 27 in Anlage an dem Gleitring 24 gehalten. Die Kolben 25 gleiten in Zylinderbohrungen 28 eines Pumpengehäuses 29. Die Zylinderbohrungen 28 sind durch Stopfen 30 verschlossen. Jeder Stopfen 30 ist mit einer Bohrung 31 versehen und weist an seiner Stimfläche zwei parallele Rillen 32 auf, die in Umfangsrichtung der Radialkolbenpumpe verlaufen und die innerhalb einer bearbeiteten Dichffläche 33 der Stimfläche enden. An jedem Stopfen 30 wird ein Rückschlagventil dadurch gebildet, daß alle Stopfen von einer gemeinsamen Bandfeder 34 umfaßt sind. Die Bandfeder 34 dichtet die Bohrungen 31 und die Rillen 32 gegenüber einer radial außerhalb der Stopfen 30 liegenden Sammelringnut 35 ab. Die Sammelringnut 35 dient gleichzeitig als Tilgerraum, der direkt an den Rückschlagventilen angeordnet ist. Bei Förderung der Radialkolbenpumpe 1 wird die Bandfeder 34 an denjenigen Stopfen 30 durch den Druck in der Bohrung 31 und in den Rillen 32 von der Dichffläche 33 abgehoben, die in der Druckzone der Radialkolbenpumpe liegen.

Von der Sammelringnut 35 wird das Druckmittel einer nicht dargestellten Schmiereinrichtung und einer ebenfalls nicht dargestellten Steuer- und Betätigungseinrichtung des Getriebes zugeleitet, beispielsweise zur Betätigung der Schaltbremse 7.

Im Bereich des radial nach außen gerichteten Kolbenrandes 36 der Kolben 25 ist in dem Pumpengehäuse 29 koaxial zu der Pumpenachse eine Ansaug-Ringnut 37 angeordnet, die die Zylinderbohrungen 28 anschneidet. Durch die Verschneidung zwischen der Ansaug-Ringnut 37 und den Zylinderbohrungen 28 werden Ansaugöffnungen 38 gebildet. Zwischen dem Kolbenrand 36 und der jeweiligen Ansaugöffnung 38 wird an jedem Kolben 25 eine Saugdrossel gebildet.

### Bezugszeichen

- 1: Radialkolbenpumpe
- 2: Getriebegehäuse
- 3: hydrodynamischer Wandler
- 4: Leitrad
- 5: Turbinenrad
- 6: Pumpenrad
- 7: Schaltbremse
- 8: Freilauf
- 10: Leitradhohlwelle
- 13: Zapfen
- 14: Pumpenwelle
- 22: Exzentergleitbuchse
- 23: Gleitbuchse
- 24: Gleitring
- 25: Kolben
- 26: Druckfeder
- 27: Kolbenboden
- 28: Zylinderbohrung
- 29: Pumpengehäuse
- 30: Stopfen
- 31: Bohrung
- 32: Rille
- 33: Dichtfläche
- 34: Bandfeder
- 35: Sammelringnut
- 36: Kolbenrand
- 37: Ansaug-Ringnut
- 38: Ansaugöffnung

## Patentansprüche

1. Getriebe, insbesondere Automatgetriebe oder stufenloses Getriebe, für Kraftfahrzeuge, mit einer Verdrängerpumpe für die Versorgung einer Schmiereinrichtung und/oder von Steuer- und Betätigungseinrichtungen des Getriebes, wobei die Verdrängerpumpe mit der Drehzahl des Antriebsmotors angetrieben wird, dadurch **gekennzeichnet,**
- daß die Verdrängerpumpe eine sauggedrosselte Radialkolbenpumpe (1) ist,
- daß die Kolben (25) der Radialkolbenpumpe (1) als Tiefziehteile ausgebildet sind, deren ihrem Kolbenboden (27) entgegengesetzter Kolbenrand (36) in der Pumpe radial nach außen gerichtet ist,
- daß durch die Verschneidung zwischen den Zylinderbohrungen (28) und einer koaxial zur Pumpenachse in einem Pumpengehäuse (29) angeordneten Ansaug-Ringnut (37) Ansaugöffnungen (38) gebildet sind, wobei die Ansaug-Ringnut (37) von dem Exzenterraum getrennt ist und
- daß der Kolbenrand (36) und die Ansaugöffnungen (38) zusammen Saugdrosseln bilden.

2. Getriebe nach Anspruch 1, dadurch **gekennzeichnet,**
- daß jede Zylinderbohrung (28) der Radialkolbenpumpe (1) radial nach außen durch Stopfen (30) verschlossen ist,
- daß jeder Stopfen (30) mit einer Bohrung (31) versehen ist und an seiner Stirnfläche parallele Rillen (32) aufweist, die in Umfangsrichtung der Radialkolbenpumpe (1) verlaufen und innerhalb einer bearbeiteten Dichtfläche (33) der Stirnfläche enden und - daß alle Stopfen (30) zur Bildung von Rückschlagventilen von einer gemeinsamen Bandfeder (34) umfaßt sind.

## Claims

1. Gear unit, in particular an automatic transmission or infinitely variable speed transmission, for motor vehicles, having a positive-displacement pump for supplying a lubricating device and/or control and actuating devices of the gear unit, the positive-displacement pump being driven at the rotational speed of the drive motor,
**characterized** in
- that the positive-displacement pump is a suction-throttled radial piston pump (1).
- that the pistons (25) of the radial piston pump (1) take the form of deep-drawn parts, of which the piston edge (36) opposite their piston head (27) is directed radially outwards in the pump;
- that, by virtue of the intersection between the cylinder bores (28) and an intake annular groove (37) disposed coaxially to the pump axis in a pump housing (29), intake openings (38) are formed, the intake annular groove (37) being separate from the eccentric area and
- that the piston edge (36) and the intake openings (38) together form suction throttles.

2. Gear unit according to claim 1, **characterized** in
- that each cylinder bore (28) of the radial piston pump (1) is sealed off radially from the outside by plugs (30),
- that each plug (30) is provided with a bore (31) and has at its end face parallel grooves (32), which extend in a peripheral direction of the radial piston pump (1) and terminate inside a machined sealing surface (33) of the end face and
- that all of the plugs (30), for forming check valves, are embraced by a common coil spring (34).

## Revendications

1. Boîte de vitesses, notamment boîte de vitesses automatique ou à fonctionnement en continu pour véhicules automobiles comportant une pompe de refoulement pour l'alimentation d'une installation de lubrification et/ou d'une installation de commande et d'actionnement de la boîte, dans laquelle la pompe de refoulement est entraînée en fonction de la vitesse de rotation du moteur du véhicule,
**caractérisée**
- en ce que la pompe de refoulement est une pompe à piston radial (1) ayant un étranglement à l'aspiration.
- en ce que les pistons (25) de la pompe à piston radial (1) sont constitués par des pièces estampées dont le rebord du piston (36), opposé au fond (27), est orienté radialement vers l'extérieur de la pompe;
- en ce que des ouvertures d'aspiration (38) sont ménagées dans une rainure d'aspiration (37) disposé dans le boîtier de la pompe (29) et coaxiale à l'axe de la pompe, ces ouvertures étant localisées entre les alésages cylindriques (28), et
- en ce que le rebord (36) et les ouvertures d'aspiration (38) constituent ensemble des étranglements d'aspiration.

2. Boîte de vitesses selon la revendication 1,
**caractérisée**
- en ce que chaque alésage cylindrique (28) de la pompe à piston radial (1) est obturé radialement du côté extérieur par des bouchons (30),
- en ce que chaque bouchon (30) est pourvu d'un alésage (31) et comporte des rainures parallèles (32) sur sa face frontale, qui s'étendent à la périphérie de la pompe à piston radial (1) et se prolongent jusqu'à une surface d'étanchéité (33) usinée de la surface frontale, et
- en ce que tous les bouchons (33) agencés pour constituer des soupapes anti-retour, sont entourés d'un ressort plat (34) commun.
